(19) Europäisches Patentamt
European Patent Office
Office européen des brevets

(11) EP 1 645 544 B1

(12) EUROPÄISCHE PATENTSCHRIFT

(45) Veröffentlichungstag und Bekanntmachung des Hinweises auf die Patenterteilung:
**25.03.2009 Patentblatt 2009/13**

(51) Int Cl.:
***C01B 33/146*** *(2006.01)* ***D21H 17/09*** *(2006.01)*
***D21H 23/76*** *(2006.01)* ***D21H 17/68*** *(2006.01)*
***D21H 17/69*** *(2006.01)* ***D21H 21/10*** *(2006.01)*

(21) Anmeldenummer: **05020332.2**

(22) Anmeldetag: **17.09.2005**

(54) **Papierherstellung mit modifizierten Schichtsilikaten als Mikropartikel**

Paper production comprising modified layered silicate as a microparticle

Production de papier comprenant silicate en couches modifié comme microparticule

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **05.10.2004 DE 102004049012**

(43) Veröffentlichungstag der Anmeldung:
**12.04.2006 Patentblatt 2006/15**

(73) Patentinhaber: **Kemira Oyj**
**00180 Helsinki (FI)**

(72) Erfinder:
- **Meisel, Karlheinrich, Dr.**
  **51519 Odenthal (DE)**
- **Hauschel, Bernd, Dr.**
  **51373 Leverkusen (DE)**
- **Montoya, Carlos Mario Moreno**
  **51377 Leverkusen (DE)**
- **Nennemann, Arno, Dr.**
  **51469 Bergisch Gladbach (DE)**

(74) Vertreter: **Bublak, Wolfgang et al**
**Bardehle, Pagenberg, Dost, Altenburg, Geissler,**
**Galileiplatz 1**
**81679 München (DE)**

(56) Entgegenhaltungen:
**WO-A-00/69976**
**WO-A-20/05003455**
**US-A- 4 690 868**
**US-A- 5 643 414**
**US-A- 5 760 126**
**US-A- 5 888 290**
**US-A1- 2002 179 267**
**US-A1- 2003 066 617**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 645 544 B1

## Beschreibung

Die Erfindung betrifft die Verwendung modifizierter Schichtsilicate für die Papierherstellung, modifizierte Schichtsilicate an sich sowie Verfahren zu ihrer Herstellung.

Bei der Herstellung von Papier werden zur Verbesserung von Retention, Entwässerungsverhalten und Formation (hierunter wird die Gleichmäßigkeit" bzw. ,,Wolkigkeit" des Papiers verstanden) Mikropartikelsysteme eingesetzt. Diese können sowohl organischer als auch anorganischer Natur sein. Sie werden bevorzugt in Kombination mit kationischen Polymeren eingesetzt.

Als anorganische Mikropartikel werden bevorzugt Schichtsilicate sowie Kieselsole eingesetzt.

Im Gegensatz zu den organischen Mikropartikelsystemen, die ihre volle Wirkung auch in saurem Medium entfalten, haben anorganische Mikropartikelsysteme auf Basis von Schichtsilicaten oder Kieselsol den Nachteil, dass sie ihre optimale Wirkung nur in neutralem oder alkalischem Medium erreichen.

US 2003/0066617 A1 betrifft wässrige Kieselsole mit einer spezifischen Oberfläche und einem spezifischen S-Wert. WO 2005/003455 A und WO 00/69976 A sind auf modifizierte Kieselsole gerichtet. US-A-5 888 290 und US-A-5 760 126 beschreiben fluorhaltige Zusammensetzungen, die Sole aus modifizierten, anorganischen Mikropartikeln enthalten. US-A-4 690 868 offenbart die Oberflächenbehandlung eines zweidimensionalen Schichtsilikats mit Ammoniakgas, was zur Ausbildung von $NH_2$-Gruppen an der Oberfläche des Silikats führt.

Aufgabe der vorliegenden Erfindung war es, Schichtsilicate als Mikropartikel für die Papierherstellung bereitzustellen, die eine Verbesserung des Standes der Technik, insbesondere bei der Anwendung bei niedrigeren pH-Werten bei der Beschleunigung der Entwässerung und Verbesserung der Retention aufweisen.

Überraschenderweise wurde nun gefunden, dass Schichtsilicate, die mit substituierten Hydroxyalkylsilanen modifiziert sind, diese Aufgabe lösen.

Die Erfindung betrifft daher die Verwendung von Aminogruppen-, Sulfonsäuregruppen- und/oder Mercaptogruppen-haltigen Schichtsilicaten als Mikropartikel bei der Papierherstellung, bei der Papierretention und/oder Entwässerung. Weiterhin betrifft die Erfindung anorganische Schichtverbindungen gemäß Anspruch 6, deren Verwendung gemäß Anspruch 11 und ein Verfahren zu deren Herstellung gemäß Anspruch 12.

Im Rahmen dieser Anmeldung werden unter "Säuregruppe" auch deren Salze, insbesondere Alkali-, wie Natrium- und Kalium-, Erdalkali-, wie Magnesium- und Calcium- oder Ammoniumsalze verstanden.

Bevorzugt sind solche Schichtsilicate, die mit einem Silan modifiziert wurden, das eine an ein Siliciumatom gebundene Gruppe der Formel I und/oder II und/oder III aufweisen,

$$-B-(SO_3M)_p- \quad (I),$$

$$-B-(SH)_p- \quad (II),$$

$$-B-(NH_2)_p \quad (III)$$

worin

B ein (p+1)-valentes Brückenglied bedeutet,

p eine Zahl von 1 bis 3 ist und

M für Wasserstoff, Alkali insbesondere Na, Li, K, Erdalkali insbesondere Mg, Ca oder Ammonium steht.

Besonders bevorzugt ist B bivalent, d.h. p steht für 1. Vorzugsweise steht B für eine gegebenenfalls durch ein oder mehrere Sauerstoffatome unterbrochene lineare oder verzweigte Alkylengruppe mit 1 bis 15 C-Atomen, eine Cycloalkylengruppe mit 5 bis 8 C-Atomen oder eine Einheit der Formeln

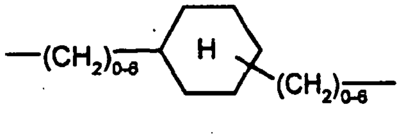 oder 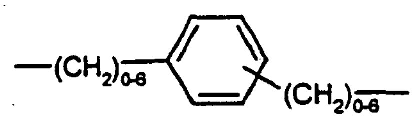.

Ganz besonders bevorzugt steht B für $-(CH_2)_n-$ mit n = 1 bis 6, insbesondere 3.

Bevorzugt werden Schichtsilicate mit Sulfonsäuregruppen, insbesondere solchen der Formel I, besonders

bevorzugt solchen der Formel Ia

$$-(CH_2)_3-SO_3M \qquad (Ia)$$

verwendet, wobei M die oben angegebene Bedeutung hat.

Bevorzugt wird erfindungsgemäß das Schichtsilicat in Kombination mit kationischen Polymeren, insbesondere solchen aus der Gruppe der Polyethylenimine, Polyamidamine, Polyacrylamide, Polyvinylamine, Stärke oder Guarkernmehl, die ggf. weiter modifiziert sein können und die einzeln oder in beliebiger Mischung miteinander eingesetzt werden können, eingesetzt.

Als bevorzugte Polyethylenimine sind lineare oder verzweigte Verbindungen mit einem Molekulargewicht von größer 0,5 Mio g/mol, insbesondere von 500 000 bis 2 Mio g/mol, vorzugsweise von 700 000 bis 1,5 Mio g/mol zu nennen.

Als bevorzugte Polyamidamine sind lineare oder verzweigte Verbindungen mit einem Molekulargewicht von größer 0,5 Mio g/mol, insbesondere von 500 000 bis 2 Mio g/mol, vorzugsweise von 700 000 bis 1,5 Mio g/mol zu nennen.

Bevorzugte Polyacrylamide können sowohl linear als auch verzweigt sein. Ihr Molekulargewicht kann von 2 Mio bis 30 Mio Dalton liegen, bevorzugt von 2,5 Mio bis 15 Mio Dalton.

Als bevorzugte Stärkederivate sind kationische Stärken auf der Basis von Kartoffeln, Tapioca, Mais, Weizen oder Reis zu nennen. Sie haben bevorzugt einen Substitutionsgrad von 0,005 bis 0,15, besonders bevorzugt einen Substitutionsgrad von 0,02 bis 0,08. Die Stärken können ggf. auch teilweise abgebaut sein.

Hierin beschrieben werden auch Sulfonsäuregruppen- und/oder Mercaptogruppen-haltige Schichtsilicate mit einem Schwefelgehalt, bezogen auf $SiO_2$ des Schichtsilicats von 0,02 mmol bis 1000 mmol, vorzugsweise 0,2 mmol bis 400 mmol,insbesondere 1 mmol bis 200 mmol. Hierbei beziehen sich die Mengen auf 100 g Schichtsilicat (mmol/100g).

Ansonsten gelten die oben angegebenen Vorzugsbereiche. Die Schichtsilicate mit einem derartigen Schwefelgehalt besitzen insbesondere einen Rest der Formel $-(CH_2)_3-SO_3M$, worin M die obige Bedeutung hat und insbesondere für H oder Na steht.

Hierin beschrieben wird auch ein Verfahren zur Herstellung der Schichtsilicate, bei dem man ein SH- und $SO_3M$-gruppenfreies Schichtsilicat, worin M die obige Bedeutung hat,
zur optionalen Einführung der SH-Gruppen

a) mit Mercaptoverbindungen umsetzt und
zur optionalen Einführung der Sulfonsäuregruppen

b) mit einer $SO_3M$-gruppenhaltigen Verbindung umsetzt oder

b1) mit einer eine funktionelle Gruppe enthaltenden Verbindung umsetzt und die funktionelle Gruppe selbst in eine $SO_3M$-Gruppe überführt, insbesondere die nach a) erhaltene Mercaptoverbindung oxidiert, oder

b2) mit einer eine funktionelle Gruppe enthaltenden Verbindung umsetzt und das so derivatisierte Schichtsilicat weiter mit einer $SO_3M$-gruppenhaltigen Verbindung umsetzt,

wobei die Umsetzung in einem wässrigen Medium mit einem Wassergehalt von wenigstens 75 Gew.-% in wenigstens einer der Stufen a), b), b1) oder b2), bezogen auf das jeweilige Reaktionsgemisch, durchgeführt wurde.

Besonders bevorzugt sind die Varianten a), b) und b1).

Als $SO_3M$-gruppenhaltige Verbindung ist bevorzugt die Verbindung der Formel III zu nennen

$$(CH_3)_qSi(OR)_m(OH)_p-(CH_2)_n-SO_3M \qquad (III),$$

worin
m und p jeweils eine Zahl von 0 bis 3 bedeuten,

q = 0 oder 1 ist

und die Summe von q und m und p = 3 ist,

n = 1 bis 15, vorzugsweise 1 bis 6, insbesondere 3,

M die obige Bedeutung hat und

R für $C_1$-$C_3$-Alkyl, insbesondere für Methyl oder Ethyl steht.

Besonders bevorzugt sind Verbindungen der Formel III, die der Formel IIIa entsprechen

$$(CH_3)_q\ Si(OH)_p\text{-}(CH_2)_3\text{-}SO_3M \qquad (IIIa),$$

worin

M, p und q die oben genannte Bedeutung haben, insbesondere steht p für 3 und q für 0.

Besonders bevorzugt sind auch Verbindungen der Formel IV, die der Formel entsprechen

$$(CH_3)_q\ Si(OH)_p\text{-}(CH_2)_3\text{-}NH_2 \qquad (IV),$$

worin

p und q die oben genannte Bedeutung haben, insbesondere steht p für 3 und q für 0.

Als Basis der modifizierten anorganischen Schichtverbindungen werden die unmodifizierten Formen eingesetzt, die dann modifiziert werden. Es kann sich dabei sowohl um synthetische als auch um natürlich vorkommende Schichtverbindungen handeln. Zu ihnen gehören beispielsweise die Schichtsilicate bzw. Tonminerale bzw. Tonmineral enthaltende Allevardit, Amesit, Beidellit, Bentonit, Fluorhectorit, Fluorvermiculit, Glimmer, Halloysit, Hectorit, Illit, Montmorillonit, Muscovit, Nontronit, Palygorskit, Saponit, Sepiolit, Smectit, Stevensit, Talkum, Vermicullit, und synthetische Talkum-Typen und die Alkalisilikate Maghemit, Magadiit, Kenyait,Makatit, Silinait, Grumantit, Revdit sowie deren hydratisierte Formen und die zugehörigen kristallinen Kieselsäuren. Außerdem können andere anorganische Schichtverbindungen wie Hydrotalcite, Doppelhydroxide und Heteropolysäuren eingesetzt werden.

Ebenfalls Gegenstand der Erfindung ist ein Verfahren gemäß Anspruch 12 zur Herstellung der modifizierten Schichtsilicate. Nach dem erfindungsgemäßen Verfahren werden sie vorzugsweise in wässriger Lösung hergestellt.

Das Verfahren zur Herstellung der erfindungsgemäßen Verbindungen zeichnet sich vorzugsweise dadurch aus, dass anorganische Schichtverbindungen eingesetzt werden, die Kationenaustauschkapazitäten zwischen 10 und 200 meq/100 g, bevorzugt 50 - 150 meq/g und als Gegenionen Alkali- oder Erdalkaliionen haben. Diese Schichtverbindungen werden vorzugsweise in wässrigen Dispersionen oder in Dispersionen in Mischungen aus Wasser und polaren, mit Wasser mischbaren Lösungsmitteln modifiziert. Die Modifikation erfolgt vorzugsweise in Silan-Konzentrationen von 0,01 bis 90%, bevorzugt 0,1 bis 40 %, ganz besonders bevorzugt 0,1 bis 35 %. Die Modifikation wird bei Temperaturen zwischen 0°C und 150°C durchgeführt. Sie kann entweder bei Normaldruck oder bei erhöhtem Druck durchgeführt werden. Bevorzugt ist eine Reaktion bei Normaldruck bei Temperaturen zwischen 15°C und 80°C, ganz besonders bevorzugt bei 15°C bis 50°C. Die Modifikation kann bei pH-Werten zwischen pH 1 und pH 11 durchgeführt werden. Bevorzugt ist ein pH-Bereich zwischen 3 und 10,5.

Die Modifikation erfolgt vorzugsweise bei Feststoffgehalten an Schichtsilicat in der Dispersion von 0,001 bis 10 Gew-%, bevorzugt bei 0,1 bis 5 Gew-%, besonders bevorzugt bei 0,1 bis 3 Gew.-%.

Die Modifikation kann sowohl in einem separaten Schritt erfolgen, als auch kurz vor der Verwendung bei der Papierherstellung. Das Verhältnis von Silan zu Schichtverbindung entspricht vorzugsweise dem 0,002 - 5-fachen der Kationenaustauschkapazität der eingesetzten Schichtverbindung. Die erfindungsgemäßen modifizierten Schichtsilicate zeichnen sich damit vorzugsweise aus durch einen Gehalt an Silanen der Formel I bis IV von 0,02 mmol bis 1000 mmol, vorzugsweise 0,2 mmol bis 400 mmol. Besonders bevorzugt sind 1 mmol bis 200 mmol. Hierbei beziehen sich die Mengen auf 100 g Schichtsilicat (mmol/100g).

Die verwendeten Silane können sowohl durch Alkoxygruppen als auch durch Hydroxigruppen substituiert sein. Bevorzugt ist der Einsatz von Trihydroxisilylverbindungen, die durch Hydrolyse der Trialkoxisilane hergestellt wurden. Die Hydrolyse kann in einem Eintopfverfahren während der Modifikation oder in einem separaten Schritt durchgeführt werden.

Beschrieben wird weiterhin ein Verfahren zur Herstellung von Papier, bei dem man einer wässrigen Faserstoffsuspension das erfindungsgemäße Schichtsilicat und ein kationisches Polymer in beliebiger Reihenfolge zugibt, anschließend die Blattbildung einschließlich der Entwässerung und Trocknung des Blattes vornimmt. Solche Verfahren sind beispielsweise in US-A-5 643 414 beschrieben.

Die erfindungsgemäßen Schichtsilicate zeichnen sich durch eine deutlich verbesserte Effizienz bei der Entwässerungsgeschwindigkeit und der Retention insbesondere in Kombination mit kationischen Polymeren geringer Ladungsdichte aus.

## Beispiele

### Beispiel 1:

10 g einer ethanolischen Lösung enthaltend 50 Gew.-% eines Silans der Formel $Si(OCH_3)_3$-$(CH_2)_3$-SH werden unter heftigem Rühren bei Raumtemperatur in 100 ml Wasser eingetropft. Dabei wird der pH-Wert durch Titration mit NaOH oberhalb von pH 10 gehalten. Nach einstündigem Verrühren bei Raumtemperatur wird das Ethanol abdestilliert.

Man erhält 80 g einer wässrigen Lösung von $Si(OH)_3$-$(CH_2)_3$-SH, das ggf. bereits über Wasserstoffbrücken aggregiert sein kann.

### Beispiel 2:

100 g einer Lösung gemäß Beispiel 1 werden durch Eintropfen von Wasserstoffperoxid oxidiert. Man erhält eine Lösung eines Silans der Bruttoformel $Si(OH)_3$-$(CH_2)_3$-$SO_3H$, das ggf. bereits über Wasserstoffbrücken aggregiert sein kann.

### Beispiel 3:

10 g einer ethanolischen Lösung enthaltend 50 Gew.-% eines Silans der Formel $Si(OCH_3)_3$-$(CH_2)_3$-$NH_2$ werden unter heftigem Rühren bei Raumtemperatur in 100 ml Wasser eingetropft. Nach einstündigem Verrühren bei 20 bis 40°C wird das Ethanol abdestilliert.

Man erhält 80 g einer wässrigen Lösung von $Si(OH)_3$-$(CH_2)_3$-$NH_2$, das ggf. bereits über Wasserstoffbrücken aggregiert sein kann.

### Beispiel 4:

583 g Wasser werden mit 541,2 g Wasserstoffperoxid 35%ig bei 50°C vorgelegt. Innerhalb von 4 Stunden werden 375,9g 3-Mercaptopropyltrimethoxysilan 97%ig zudosiert. Anschließend wird noch 2 Stunden nachgerührt. Der pH-Wert wird mit 50%iger NaOH auf 2,8 eingestellt. Das bei der Reaktion gebildete Methanol wird bei 50°C und 130 mbar abdestilliert. Anschließend wird mit Wasser auf einen Trockengehalt von 25% eingestellt.

### Beispiel 5:

200 g einer 0,5 %-igen (w/w) Dispersion eines handelsüblichen Schichtsilicats (Bentonit) (hergestellt durch Einwaage von 1 g dieses Bentonits auf 199 g Wasser und 12 h Schütteln bei 20°C) in entionisiertem Wasser wurden mit einer 20 %-igen (w/w) Lösung 3-Sulfopropylhydroxysilan in 10 %-iger NaOH versetzt und 1 Woche bei Raumtemperatur geschüttelt (siehe auch Tabelle 1).

Die so erhaltene Suspension wurde dann in einer 200 ml Ultrafiltrationszelle über ein 25nm-Filter (Millipore, USWP 09025) unter permanentem Rühren mit entionisiertem Wasser gewaschen, bis die Leitfähigkeit auf einen Wert von ~ 8 μS/cm gesunken war. Der Filtrationsdruck betrug 4 bar. Im klaren Filtrat wurde der pH-Wert und die Leitfähigkeit als Maß das Waschfortschrittes gemessen.

Der Waschprozess wurde bei Leitfähigkeiten um 20 - 30 μS/cm (ausgehend von > 2000 μS/cm) und pH-Werten um 7 - 8 (ausgehend von pH-Werten > 11) beendet. Hierzu wurden 15 - 20 Waschschritte benötigt.

Der Feststoffgehalt der Dispersionen wurde nach dem letzten Waschschritt mittels Trockenwaage bestimmt, und der Feststoffgehalt durch Zugabe von Wasser wieder auf den Ursprungswert eingestellt.

**Tabelle 1** Es wurden 4 im Handel erhältliche, unterschiedliche Schichtsilicate umgesetzt:

| | CEC [meq {100g] | Zugesetzte Menge alk. Silan- Lsg (pro 200 g 0,5%-iger Bentonit-Dispersion) |
|---|---|---|
| **5a.** Bentonit1 | 75,8 | 0,766g |
| **5b.** Bentonit2 | 104 | 0,935g |
| **5c.** bentonit3 | 99,6 | 0,900g |
| **5d.** Bentonit4 | 111 | 1,121g |

### Beispiel 6:

Die Wirksamkeit der Verbindungen aus den Beispielen 1 bis 5 wurde in bekannter Weise durch eine Bestimmung

der Entwässerungsgeschwindigkeiten in einem Mütek DFS 03 Gerät, Sieb 60 /0,17 bestimmt.

Als Standard diente jeweils ein handelsübliches, nicht-erfindungsgemäß modifiziertes Schichtsilicat. Seine Wirksamkeit wurde auf 100% gesetzt.

**Durchführung der Entwässerungsprüfung**

Um eine optimale Differenzierung sowie Vergleichbarkeit zwischen den einzelnen Prüfreihen zu erreichen, wird ein automatisiertes Dosier- und Rührprofil eingehalten. Zur Prüfung wird ein Gerät der Firma Mütek (DFS 03) (Dynamic Filtration System) eingesetzt. Mit diesem Gerät ist es u.a. möglich, Rührprofile in Abhängigkeit von der Zeit vorzugeben und den vorgelegten Stoff mit bis zu 1500 U/min zu scheren.

Als Modellsystem für die Prüfungen wurde eine Papierstoffsuspension aus Lang- und Kurzfaser-zellstoff mit einem Zusatz von GCC (ground calcium carbonate wie bspw. Hydrocarb® 50 der Firma Omya) eingesetzt (56 % gebleichter Kurzfaser-Zellstoff, 24 % gebleichter Langfaser-Zellstoff und 20 % HYDROCARB® 50). Die Stoffdichte betrug 0,5 %. Als Referenzsystem wurde ein Polyacrylamid mit einer Kationizität von 20 mol- % und einer Brookfield-Viskosität von 3,91, gemessen als 0,1%ige Lösung in 1molarem NaCl bei 60 Upm, mit den Mikropartikeln kombiniert. Der Wirkstoffgehalt der Handelsware beträgt 40 Gew.-%. Zur Messung der Entwässerung (und der Retention) mit dem DFS 03 wird das Polyacrylamid in einer Konzentration von 0,075 Gew.-% (gerechnet als Handelsware) und das Mikropartikel in einer Konzentration von 0,4 Gew.-% (gerechnet als Aktivsubstanz), jeweils bezogen auf den Papierstoff eingesetzt.

Zur Messung der Entwässerung mit dem DFS 03 wird jeweils 11 Stoff unter Rühren (500 Upm) vorgelegt und eine 0,1%ige Lösung des Polyacrylamids, die wie unten beschrieben hergestellt wurde, nach 20 s zudosiert. Dann wird für weitere 10 s bei 500 Upm gerührt und danach die Rührgeschwindigkeit für 20 s auf 1000 Upm erhöht. Nach dieser Phase wird die Rührgeschwindigkréit wieder auf 500 Upm verringert und gleichzeititg die Mikropartikel-Suspension (Konzentration 0,5 Gew.-%) zugegeben. Nach 15 s Rühren bei 500 Upm wird das Ventil unter dem Sieb geöffnet und die Entwässerungszeit für eine Wassermenge von 600 g gemessen. Die Entwässerungszeit der Nullprobe betrug ca. 60 s.

Einwaagen:

In 99,6 g Wasser (Leitungswasser) werden 0,4 g des Polyacrylamids unter Rühren eingestreut, 15 Minuten gerührt (Magnetrührer 300 U/min), danach eine 0,5 h zur Quellung stehen lassen (Rührer abstellen).

Anschließend wird auf 400 g aufgefüllt (0,1 %ige Lsg.) und bei 500 U/min ca. 2,5 h gerührt bis alles vollständig gelöst ist.

Die Wirksamkeitssteigerung bezogen auf die Entwässerungszeit eines nicht erfindungsgemäß modifizierten Bentonits ergibt sich wie folgt:

$$\text{Wirksamkeitssteigerung} = E^{(mB)0}/E^{mB} * 100\ [\%]$$

wobei gilt

$E^{(mB)0}$ : Entwässerungszeit [sec] eines nicht erfindungsgemäß modifizierten Bentonits

$E^{mB}$ : Entwässerungszeit [sec] des erfindungsgemäß modifizierten Bentonits

Es ergaben sich die folgenden Wirksamkeitssteigerungen:

| | CEC / meq/g | Verbesserung Wirksamkeit nach Modifizierung / % | Relative Wirksamkeit / % Referenz |
|---|---|---|---|
| | | | |
| Bentonit 1 | 76 | 107 | 106 |
| Bentonit 2 | 104 | 109 | 108 |
| Bentonit 3 | 100 | 107 - 111 | 108 |
| Bentonit 4 | 111 | 110 | 105 |

**Beispiel 7:**

Im Gegensatz zu Beispiel 6 wurden in Beispiel 7 nicht vorbehandelte Rohbentonite eingesetzt.

Jeweils 1 g dieser Rohbentonite 1 bis 4 wird jeweils in 180 ml Wasser dispergiert und mit

7 a. 0,1 mmol Trihydroxisilylpropansulfonsäure /100 g Feststoff
7 b. 1 mmol Trihydroxisilylpropansulfonsäure /100g Feststoff
7 c. 10 mmol Trihydroxisilylpropansulfonsäure /100g Feststoff
7 d. 100 mmol Trihydroxisilylpropansulfonsäure /100g Feststoff
als wässrige Lösung gemäß Beispiel 2 bei Raumtemperatur und einem pH - Wert von 7 über Nacht verrührt. Anschließend wird mit Wasser auf 200 ml aufgefüllt.

**Beispiel 8:**

Die Wirksamkeit der so modifizierten Rohbentonite wurde wie in Beispiel 6 beschrieben durch Bestimmung der Entwässerungsgeschwindigkeit geprüft, jedoch wird der Bentonit in einer Konzentration von 0,26% bezogen auf Stoff eingesetzt. Die Wirksamkeitssteigerung wurde als Verhältnis der Abweichungen der Entwässerungszeit vom reinen Polyacrylamid des erfindungsgemäß modifizierten Bentonits und des Rohbentonits berechnet. Es ergibt sich folgender Faktor für die Wirksamkeitssteigerung

$$\text{Wirksamkeitssteigerung}_{(\Delta EmB/\Delta\, EB)} = \Delta E^{mB}/\Delta\, E^{B} = (E^{0}-E^{mB})/(E^{0}-E^{B})$$

$E^0$ : Entwässerungszeit [sec] mit reinem Polyacrylamid (bentonitfrei)
$E^{mB}$ : Entwässerungszeit [sec] mit erfindungsgemäß modifiziertem Bentonits
$E^B$ : Entwässerungszeit [sec] mit Rohbentonit
Im Fall von Rohbentonit 1 ergaben sich beispielsweise folgende Entwässerungszeiten:

| | |
|---|---|
| Polyacrylamid ohne Bentonitzusatz: | 56,6 sec |
| Polyacrylamid + Hydrocol O: | 42,7 sec |
| Polyacrylamid + Rohbentonit 1: | 50,3 sec |
| Polyacrylamid + Rohbentonit 1, das mit 0,1 mmol/100g Trihydroxipropansulfonsäure aus Beispiel 4 modifiziert wurde: | 25,8 sec |
| Polyacrylamid + Rohbentonit 1, das mit 1 mmol/100g Trihydroxipropansulfonsäure aus Beispiel 4 modifiziert wurde: | 25,2 sec |
| Polyacrylamid + Rohbentonit 1, das mit 10 mmol/100g Trihydroxipropansulfonsäure aus Beispiel 4 modifiziert wurde: | 28,9 sec |
| Polyacrylamid + Rohbentonit 1, das mit 100 mmol/100g Trihydroxipropansulfonsäure aus Beispiel 4 modifiziert wurde: | 35,1 sec |
| Polyacrylamid + Rohbentonit 1, das mit 1000 mmol/100g Trihydroxipropansulfonsäure aus Beispiel 4 modifiziert wurde: | 36,1 sec. |

Aus der Differenz der Entwässerungszeit bei Einsatz von reinem Polyacrylamid von 56,6 sec und der Entwässerungszeit unter Zusatz von Rohbentonit 1 von 50, 3 sec ergibt sich eine Beschleunigung um 6,3 Sekunden.

Aus der Differenz der Entwässerungszeit bei Einsatz von reinem Polyacrylamid von 56,6 sec und der Entwässerungszeit unter Zusatz von mit 0,1 mmol/100g Sulfosilan modifiziertem Rohbentonit 1 von 25,8 sec ergibt sich dagegen eine Beschleunigung um 31 Sekunden. Daraus wurde eine Beschleunigung der Entwässerung um den Faktor 4,9 errechnet. Wirkung der anderen Bentonite wurde analog bestimmt.

| | 0,1mmol/ 100g | 1 mmol/ 100g | 10 mmol/ 100g | 100 mmol/ 100g | 1000 mmol/ 100g |
|---|---|---|---|---|---|
| Rohbentonit1 | 4,9 | 5 | 4,4 | 3,4 | 3,3 |
| Rohbentonit2 | 3,3 | 3,4 | 3,1 | 2,5 | 2,8 |
| Rohbentonit4 | 2,1 | 1,7 | 1,3 | 2 | 2,1 |

**Beispiel 9:**

Die Modifikation der Bentonite wird durchgeführt wie in Beispiel 7, die Prüfung der Entwässerungsgeschwindigkeit wie in Beispiel 8, jedoch wird zum Modifizieren das Trihydroxisilylpropylamin aus Beispiel 3 eingesetzt.

Es ergeben sich folgende Beschleunigungsfaktoren der Entwässerungszeiten:

| | 0,1mmol/ 100g | 1 mmol/ 100g | 10mmol/ 100g | 100mmol/ 100g |
|---|---|---|---|---|
| Rohbentonit1 | 2,67 | 2,73 | 2,53 | 1,03 |
| Rohbentonit2 | 1,94 | 3,3 | 2,76 | 1,3 |
| Rohbentonit3 | 2,12 | | | |

**<u>Beispiel 10:</u>**

Herstellung einer wässrigen Lösung von 3-Mercaptotrihydroxysilan:

11 Wasser wird bei 40°C vorgelegt. In 4 Stunden werden 19,6 g 3-Mercaptotromethoxysilan zugetropft. Das entstandene Methanol wird bei Normaldruck abdestilliert. Anschließend wird mit 20 ml 50%iger Natronlauge auf pH 12,8 gestellt. Man erhält eine klare wässrige Lösung.

**<u>Beispiel 11:</u>**

Die Modifikation der Bentonite wird durchgeführt wie in Beispiel 7, die Prüfung der Entwässerungsgeschwindigkeit wie in Beispiel 8, jedoch wird zum Modifizieren das Trihydroxisilylpropylmercaptan aus Beispiel 10 eingesetzt.

**<u>Beispiel 12:</u>**

Die Wirksamkeit der so modifizierten Rohbentonite wurde wie in Beispiel 6 beschrieben durch Bestimmung der Entwässerungsgeschwindigkeit geprüft, jedoch wird der Bentonit in einer Konzentration von 0,26% bezogen auf Stoff eingesetzt. Im Vergleich zu dem entsprechenden Rohbentonit ergeben sich Beschleunigungen der Entwässerungsgeschwindigkeit um die folgenden Faktoren: (Rohbentonit = 1)
Die Entwässerungsgeschwindigkeiten wurden um die folgenden Faktoren gesteigert:

| | 0,1mmol/ 100g | 1 mmol/ 100g | 10mmol/ 100g | 100mmol/ 100g |
|---|---|---|---|---|
| Rohbentonit1 | 2,67 | 2,52 | 2,58 | 1,69 |
| Rohbentonit2 | 3,32 | 3,35 | 3,27 | 1,63 |

**Patentansprüche**

1. Verwendung von Aminogruppen-, Sulfonsäuregruppen- und/oder Mercaptogruppen-haltigen Schichtsilicaten als Mikropartikel bei der Papierherstellung bei der Papierretention und/oder Entwässerung.

2. Verwendung nach Anspruch 1 **dadurch gekennzeichnet, dass** die Schichtsilicate, mit einem Silan modifiziert sind, das eine an ein Siliciumatom gebundene Gruppe der Formel I und/oder II und/oder III aufweist,

   $-B-(SO_3M)_p-$ (I),

   $-B-(SH)_p-$ (II),

   $-B-(NH_2)_p$ (III),

   worin

   B ein (p+1)-valentes Brückenglied bedeutet,
   p eine Zahl von 1 bis 3 ist und
   M für Wasserstoff, Alkali insbesondere Na, Li, K, Erdalkali insbesondere Mg, Ca oder Ammonium steht.

3. Verwendung gemäß wenigstens einem der Ansprüche 1 bis 2 **dadurch gekennzeichnet, dass** das Schichtsilikat

insbesondere des Typs Montmorillonit bzw. des den Montmorillonit enthaltenden Schichtsilikats mindestens 0,02 mmol bezogen auf 100 g festen Montmorillonit eines Alkylsilans der allgemeinen Formel

$$(CH_3)_qSi(OR)_m(OH)_p\text{-}(CH_2)_n\text{-}X$$

worin

X = $SO_3M$, SH oder $NH_2$ und

m und p jeweils eine Zahl von 0 bis 3 bedeuten,

q = 0 oder 1 ist und

und die Summe von q und m und p = 3 ist,

n = 1 bis 15, vorzugsweise 1 bis 6, insbesondere 3,
M für ein Element aus der Gruppe der Alkali-, Erdalkalimetalle oder Ammonium steht,
R für $C_1$-$C_3$-Alkyl, insbesondere für Methyl oder Ethyl steht,

enthält.

**4.** Verwendung gemäß Anspruch 3 **dadurch gekennzeichnet, dass** das Schichtsilikat mindestens 0,02 mmol bezogen auf 100 g festen Montmorillonit eines Alkylsilans der allgemeinen Formel

$$Si(OH)_3\text{-}(CH_2)_3\text{-}X$$

worin

X die in Anspruch 3 genannte Bedeutung hat, enthält.

**5.** Verwendung gemäß wenigstens einem der Ansprüche 1 bis 4 **dadurch gekennzeichnet, dass** das Schichtsilikat Schichtsilikate bzw. Tonminerale bzw. Tonmineral enthaltende Allevardit, Amesit, Beidellit, Bentonit, Fluorhectorit, Fluorvermiculit, Glimmer, Halloysit, Hectorit, Illit, Montmorillonit, Muscovit, Nontronit, Palygorskit, Saponit, Sepiolit, Smectit, Stevensit, Talkum, Vermicullit, und synthetische Talkum-Typen und die Alkalisilikate Maghemit, Magadiit, Kenyait,Makatit, Silinait, Grumantit, Revdit sowie deren hydratisierte Formen und die zugehörigen kristallinen Kieselsäuren oder andere anorganische Schichtverbindungen wie Hydrotalcite, Doppelhydroxide und Heteropolysäuren ist.

**6.** Anorganische Schichtverbindungen, insbesondere des Typs Montmorillonit bzw. des den Montmorillonit enthaltenden Schichtsilicats, **dadurch gekennzeichnet, dass** sie mindestens 0,02 mmol, bezogen auf 100 g festen Montmorillonit eines Alkylsilans der allgemeinen Formel

$$(CH_3)_qSi(OR)_m(OH)_p\text{-}(CH_2)_o\text{-}X\ ,$$

worin

X = $SO_3M$, und

m und p jeweils eine Zahl von 0 bis 3 bedeuten,

q = 0 oder 1 ist und

und die Summe von q und m und p = 3 ist,

n = 1 bis 15, vorzugsweise 1 bis 6, insbesondere 3,
M für ein Element aus der Gruppe der Alkali-, Erdalkalimetalle oder Ammonium steht
R für $C_1$-$C_3$-Alkyl, insbesondere für Methyl oder Ethyl steht,

enthalten.

**7.** Schichtverbindungen gemäß Anspruch 6, insbesondere des Typs Montmorillonit bzw. des den Montmorillonit enthaltenden Schichtsilicats, **dadurch gekennzeichnet, dass** sie mindestens 0,02 mmol, bezogen auf 100 g festen Montmorillonit eines Alkylsilans der allgemeinen Formel

$$Si(OH)_3\text{-}(CH_2)_3\text{-}X$$

worin

X die in Anspruch 6 genannte Bedeutung hat,

enthalten.

**8.** Schichtverbindungen gemäß Anspruch 6 oder 7, **dadurch gekennzeichnet, dass** als Basis der erfindungsgemäßen modifizieren anorganischen Schichtverbindungen die unmodifizierten Formen eingesetzt werden, wobei es sich dabei sowohl um synthetische als auch um natürlich vorkommende Schichtverbindungen handeln kann, wie die Schichtsilicate bzw. Tonminerale bzw. Tonmineral enthaltende Allevardit, Amesit, Beidellit, Bentonit, Fluorhectorit, Fluorvermiculit, Glimmer, Halloysit, Hectorit, Illit, Montmorillonit, Muscovit, Nontronit, Palygorskit, Saponit, Sepiolit, Smectit, Stevensit, Talkum, Vermicullit, und synthetische Talkum-Typen und die Alkalisilikate Maghemit, Magadiit, Kenyait,Makatit, Silinait, Grumantit, Revdit sowie deren hydratisierte Formen und die zugehörigen kristallinen Kieselsäuren oder andere anorganische Schichtverbindungen wie Hydrotalcite, Doppelhydroxide und Heteropolysäuren.

**9.** Modifizierte Verbindungen gemäß wenigstens einem der Ansprüche 6 bis 8, **dadurch gekennzeichnet, dass** deren Zetapotential gleich oder größer als das Zetapotenzials der unmodifizierten Schichtverbindung ist.

**10.** Modifizierte Verbindungen gemäß wenigstens einen der Ansprüche 6 bis 8, **dadurch gekennzeichnet, dass** die kolloidale Stabilität verglichen zu den unmodifizierten Proben erhöht ist.

**11.** Verwendung der anorganischen Schichtverbindungen gemäß Anspruch 6 bis 10 bei der Papierherstellung insbesondere für die Retention und/oder Entwässerung.

**12.** Verfahren zur Herstellung der Verbindungen nach wenigstens einem der Anspüche 6 bis 8, **dadurch gekennzeichnet, dass** anorganische Schichtverbindungen eingesetzt werden, die Kationenaustauschkapazitäten zwischen 10 und 200 meq/100 g, und als Gegenionen Alkali- oder Erdalkaliionen haben und diese Schichtverbindungen in wässrigen Dispersionen oder Dispersionen in Mischungen aus Wasser und polaren Lösungsmitteln mit Massenkonzentrationen < 30 %, eingesetzt werden und zu diesen Dispersionen wässrige Silanlösungen (entsprechend 1-6) mit Massengehalten < 90 % zugegeben werden, wobei das Verhältnis aus Silan zu Schichtverbindung dem 0,02 bis 5-fachen der Kationenaustauschkapazität der eingesetzten Schichtverbindung entspricht und die Herstellungstemperaturen zwischen 0° und 100°und die pH-Werte der Dispersionen zwischen 1 und 10 liegen.

## Claims

**1.** Use of sheets silicates containing amino groups, sulfonic acid groups and/or mercapto groups as microparticles in the paper production in the paper retention and/or drainage.

**2.** The use according to claim 1, **characterized in that** the sheet silicates are modified with a silane which has, bonded to a silicon atom, a group of the formula I and/or II and/or III

$$\text{-}B\text{-}(SO_3M)_p\text{-} \qquad (I),$$

$$\text{-}B\text{-}(SH)_p\text{-} \qquad (II),$$

$$\text{-}B\text{-}(NH_2)_p \qquad (III),$$

in which

B denotes a (p+1)-valent bridge member,
p is a number from 1 to 3 and
M represents hydrogen, alkali metal, in particular Na, Li, K, alkaline earth metal, in particular Mg, Ca, or ammonium.

3. The use according to at least one of claims 1 to 2, **characterized in that** the sheet silicate, in particular of the montmorillonite type or of the sheet silicate type containing montmorillonite, contains at least 0.02 mmol, based on 100 g of solid montmorillonite, of an alkylsilane of the general formula

$$(CH_3)_qSi(OR)_m(OH)_p\text{-}(CH_2)_n\text{-}X$$

in which

X = $SO_3M$, SH, or $NH_2$ and

m and p each denote a number from 0 to 3,

q = 0 or 1 and

the sum of q and m and p is 3,

n = 1 to 15, preferably 1 to 6, in particular 3,
M represents an element from the group of the alkali metals, alkaline earth metals or ammonium,
R represents $C_1$-$C_3$-alkyl, in particular methyl or ethyl.

4. The use according to claim 3, **characterized in that** the sheet siliacate contains at least 0.02 mmol, based on 100 g of solid montmorillonite, of an alkylsilane of the general formula

$$Si(OH)_3\text{-}(CH_2)_3\text{-}X$$

in which

X has the meaning stated in claim 3.

5. The use according to at least one of claims 1 to 4, **characterized in that** the sheet silicate comprises sheet silicates or clay minerals or clay mineral-containing allevardite, amesite, beidellite, bentonite, fluorohectorite, fluorovermiculite, mica, halloysite, hectorite, illite, montmorillonite, muscovite, nontronite, palygorskite, saponite, sepiolite, smectite, stevensite, talc, vermiculite and synthetic talc types and the alkali metal silicates maghemite, magadiite, kenyaite, makatite, silinaite, grumantite, revdite and the hydrated forms thereof and the associated crystalline silicic acids or other inorganic sheet compounds, such as hydrotalcites, double hydroxides and heteropoly acids.

6. Inorganic sheet compounds, in particular of the montmorillonite type or of the sheet silicate type containing montmorillonite, **characterized in that** they contain at least 0.02 mmol, based on 100 g of solid montmorillonite, of an alkylsilane of the general formula

$$(CH_3)_qSi(OR)_m(OH)_p\text{-}(CH_2)_n\text{-}X$$

in which

X = $SO_3M$, and

m and p each denote a number from 0 to 3,

q = 0 or 1 and

the sum of q and m and p is 3,

n = 1 to 15, preferably 1 to 6, in particular 3,

M represents an element from the group of the alkali metals, alkaline earth metals or ammonium,
R represents $C_1$-$C_3$-alkyl, in particular methyl or ethyl.

7. The sheet compounds according to claim 6, in particular of the montmorillonite type or of the sheet silicate type containing montmorillonite, **characterized in that** they contain at least 0.02 mmol, based on 100 g of solid montmorillonite, of an alkylsilane of the general formula

$$Si(OH)_3\text{-}(CH_2)_3\text{-}X$$

in which

X has the meaning stated in claim 6.

8. The sheet compounds according to claim 6 or 7, **characterized in that** the unmodified forms are used as a basis of the inorganic sheet compounds modified according to the invention, it being possible for these to be both synthetic and naturally occurring sheet compounds, such as the sheet silicates or clay minerals or clay mineral-containing allevardite, amesite, beidellite, bentonite, fluorohectorite, fluorovermiculite, mica, halloysite, hectorite, illite, montmorillonite, muscovite, nontronite, palygorskite, saponite, sepiolite, smectite, stevensite, talc, vermiculite and synthetic talc types and the alkali metal silicates maghemite, magadiite, kenyaite, makatite, silinaite, grumantite, revdite and the hydrated forms thereof and the associated crystalline silicic acids or other inorganic sheet compounds, such as hydrotalcites, double hydroxides and heteropoly acids.

9. Modified compounds according to at least one of claims 6 to 8, **characterized in that** the zeta potential thereof is equal to or greater than the zeta potential of the unmodified sheet compound.

10. Modified compounds according to at least one of claims 6 to 8, **characterized in that** the colloidal stability is increased in comparison with the unmodified samples.

11. Use of the inorganic sheet compounds according to claims 6 to 10 in the paper production, in particular for the retention and/or drainage.

12. A process for the preparation of the compounds according to at least one of claims 6 to 8, **characterized in that** inorganic sheet compounds which have cationic exchange capacities between 10 and 200 meq/100 g and alkali metal or alkaline earth metal ions as opposite ions are used and these sheet compounds are used in aqueous dispersions or dispersions in mixtures of water and polar solvents having mass concentrations < 30 %, and aqueous silane solutions (corresponding to 1-6) having mass contents < 90 % are added to these dispersions, the ratio of silane to sheet compound corresponding to 0.02 to 5 times the cationic exchange capacity of the sheet compound used and the preparation temperatures being between 0° and 100° and the pH values of the dispersions being between 1 and 10.

## Revendications

1. Utilisation de phyllosilicates contenant des groupes amino, des groupes acide sulfonique et/ou des groupes mercapto en tant que microparticules lors de la fabrication du papier, lors de la rétention du papier et/ou de la déshydratation.

2. Utilisation selon la revendication 1, **caractérisée en ce que** les phyllosilicates sont modifiés par un silane qui comprend un groupe de formule I et/ou II et/ou III lié à un atome de silicium

$$\text{-B-}(SO_3M)_p\text{-} \quad (I)$$

$$\text{-B-}(SH)_p\text{-} \quad (II)$$

$$\text{-B-}(NH_2)_p \quad (III)$$

dans lesquelles
B est un chaînon pontant (p+1)-valent,
p est un nombre de 1 à 3, et

M est un atome d'hydrogène, un métal alcalin, notamment Na, Li, K, un métal alcalino-terreux, notamment Mg, Ca, ou l'ammonium.

3. Utilisation selon au moins l'une des revendications 1 à 2, **caractérisée en ce que** le phyllosilicate, en particulier du type montmorillonite, ou du type phyllosilicate contenant de la montmorillonite, contient au moins 0,02 mmole, pour 100 g de montmorillonite solide, d'un alkylsilane de formule générale

$$(CH_3)_qSi(OR)_m(OH)_p\text{-}(CH_2)_n\text{-}X$$

dans laquelle
X est $SO_3M$, SH ou $NH_2$, et
chacun des indices m et p représentent un nombre de 0 à 3,
q vaut 0 ou 1, et
la somme de q et de m et de p est égale à 3,
n vaut 1 à 15, de préférence 1 à 6, en particulier 3,
M est un élément du groupe des métaux alcalins, des métaux alcalino-terreux ou de l'ammonium,
R est un groupe alkyle en $C_1$-$C_3$, en particulier le groupe méthyle ou éthyle.

4. Utilisation selon la revendication 3, **caractérisée en ce que** le phyllosilicate contient au moins 0,02 mmole, pour 100 g de montmorillonite solide, d'un alkylsilane de formule générale

$$Si(OH)_3\text{-}(CH_2)_3\text{-}X$$

dans laquelle X a les significations données dans la revendication 3.

5. Utilisation selon au moins l'une des revendications 1 à 4, **caractérisée en ce que** le phyllosilicate est une allévardite, une amésite, une béidellite, une bentonite, une fluorhectorite, une fluorovermiculite, un mica, une halloysite, une hectorite, une illite, une montmorillonite, une muscovite, une nontronite, une palygorskite, une saponite, une sépiolite, une smectite, une stévensite, un talc, une vermiculite, contenant des phyllosilicates ou des minéraux argileux ou un minéral argileux, et un type de talc de synthèse, et l'un des silicates de métaux alcalins maghémite, magadiite, kényaite, makatite, silinaïte, grumantite, révdite, ainsi que leurs formes hydratées, et les silices cristallines correspondantes ou un autre composé inorganique à structure en feuillets tel que les hydrotalcites, les hydroxydes doubles et les hétéropolyacides.

6. Composés inorganiques à structure en feuillets, en particulier du type montmorillonite ou du type phyllosilicate contenant de la montmorillonite, **caractérisés en ce qu'**ils contiennent au moins 0,02 mmole, pour 100 g de montmorillonite solide, d'un alkylsilane de formule générale

$$(CH_3)_qSi(OR)_m(OH)_p\text{-}(CH_2)_n\text{-}X$$

dans laquelle
X est $SO_3M$, et
chacun des indices m et p est un nombre de 0 à 3,
q vaut 0 ou 1, et
la somme de q et de m et de p vaut 3,
n vaut 1 à 15, de préférence 1 à 6, en particulier 3,
M est un élément du groupe des métaux alcalins, des métaux alcalino-terreux ou de l'ammonium,
R est un groupe alkyle en $C_1$-$C_3$, en particulier le groupe méthyle ou éthyle.

7. Composés à structure en feuillets selon la revendication 6, en particulier du type montmorillonite ou du type phyllosilicate contenant de la montmorillonite, **caractérisés en ce qu'**ils contiennent au moins 0,02 mmole, pour 100 g de montmorillonite solide, d'un alkylsilane de formule générale

$$Si(OH)_3\text{-}(CH_2)_3\text{-}X$$

dans laquelle X a les significations données dans la revendication 6.

8. Composés à structure en feuillets selon la revendication 6 ou 7, **caractérisés en ce qu'**on utilise, en tant que base

des composés inorganiques à structure en feuillets modifiés selon l'invention, les formes non modifiées, auquel cas il peut alors s'agir de composés à structure en feuillets tant synthétiques que naturels, tels que l'allévardite, l'amésite, la béidéllite, la bentonite, la fluorhectorite, la fluorovermiculite, le mica, l'halloysite, l'hectorite, l'illite, la montmorillonite, la muscovite, la nontronite, la palygorskite, la saponite, la sépiolite, la smectite, la stévensite, le talc, la vermiculite contenant des phyllosilicates ou des minéraux argileux ou un minéral argileux, et un type de talc synthétique, et les silicates de métaux alcalins maghémite, magadiite, kényaïte, makatite, silinaïte, grumantite, revdite, ainsi que leurs formes hydratées et les silices cristallines correspondantes, ou d'autres composés inorganiques à structure en feuillets tels que les hydrotalcites, les hydroxydes doubles et les hétéropolyacides.

9. Composés modifiés selon au moins l'une des revendications 6 à 8, **caractérisés en ce que** leur potentiel zêta est supérieur ou égal au potentiel zêta du composé non modifié à structure en feuillets.

10. Composés modifiés selon au moins l'une des revendications 6 à 8, **caractérisés en ce que** la stabilité colloïdale est augmentée par rapport aux échantillons non modifiés.

11. Utilisation des composés inorganiques à structure en feuillets selon les revendications 6 à 10 lors de la fabrication du papier, en particulier pour la rétention et/ou la déshydratation.

12. Procédé de fabrication des composés selon au moins l'une des revendications 6 à 8, **caractérisé en ce qu'**on utilise des composés inorganiques à structure en feuillets qui ont une capacité d'échange de cations comprise entre 10 et 200 méq/100 g, et en tant que contre-ions possèdent des ions de métaux alcalins ou alcalino-terreux, et ces composés à structure en feuillets sont utilisés dans des dispersions aqueuses ou dans des dispersions constituées de mélanges d'eau et de solvants polaires avec des concentrations en masse < 30 %, et des solutions a-queuses de silanes (correspondant à 1-6) ayant une teneur en masse < 90 % sont ajoutées à ces dispersions, le rapport du silane au composé à structure en feuillets correspondant à 0,02 à 5 fois la capacité d'échange de cations du composé utilisé à structure en feuillets, et les températures de fabrication sont comprises entre 0 et 100°, et le pH des dispersions est compris entre 1 et 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20030066617 A1
- WO 2005003455 A
- WO 0069976 A
- US 5888290 A
- US 5760126 A
- US 4690868 A
- US 5643414 A